# EUROPÄISCHE PATENTSCHRIFT

(11) **EP 0 374 450 B1**
(45) Veröffentlichungstag und Bekanntmachung des Hinweises auf die Patenterteilung: **21.04.1993**
(21) Anmeldenummer: 89120532.0
(22) Anmeldetag: 06.11.1989
(51) Int. Cl.: C09D 9/00

(54) **Löschflüssigkeit für Tinte**
Erasure fluid for inks
Liquide d'effaçage d'encres

(30) Priorität: 19.12.1988 DE 3842774
(43) Veröffentlichungstag der Anmeldung: 27.06.1990
(73) Patentinhaber: Pelikan GmbH, 30177 Hannover (DE)
(72) Erfinder: Mecke, Norbert, Dr., D-3000 Hannover 91 (DE); Schmedes, Albert, D-3017 Pattensen (DE)
(74) Vertreter: Volker, Peter, Dr.

(56) Entgegenhaltungen:
- DE-A- 2 216 951
- DE-B- 1 111 760
- FR-A- 2 179 741
- FR-A- 2 246 613
- US-A- 4 252 845

## Beschreibung

Die Erfindung betrifft eine wäßrige Löschflüssigkeit für Tinten auf der Basis von Triarylmethanfarbstoffen, die eine reduzierende Schwefelverbindung als eine die Entfärbung der Farbstoffe bewirkende Löschsubstanz und gegebenenfalls ein Bindemittel sowie weitere übliche Additive enthält.

Eine Löschflüssigkeit obiger Art wird in der DE-OS 2 216 951 beschrieben. Das darin enthaltene Sulfit dient der Entfärbung der mit Triarylmethanfarbstoffen ausgeschriebenen Symbole bzw. Schriftzeichen zu Korrekturzwecken. In der Löschflüssigkeit soll ein relativ hoher Anteil an reduzierendem Sulfit enthalten sein. Dabei muß ein erneutes Überschreiben mit einer Tinte erfolgen, die einen anderen Farbstoff enthält, da das auf der korrigierten Stelle verbleibende Sulfit einen aufgetragenen gleichen Farbstoff unmittelbar wieder entfärben würde. Es war daher vorgeschlagen worden, den Sulfitanteil in der Löschflüssigkeit merklich herabzusetzen. Niedrige Sulfitmengen in der Löschflüssigkeit führen aber dazu, daß diese nach längerer Lagerung nicht mehr funktionsfähig ist, da das Sulfit durch die Einwirkung von Luft bzw. Sauerstoff in nicht wirksames Sulfat überführt wird. Daher soll nach der europäischen Patentanmeldung 0 032 652 eine basische Stickstoffverbindung in geringer Konzentration als Löschsubstanz eingesetzt und der pH-Wert der Löschflüssigkeit derart eingestellt werden, daß die Stickstoffverbindung als freie Base vorliegt. Die basische Stickstoffverbindung, die, wie auch das Sulfit selbst, als Lewis-Base fungiert, behebt das Problem der schlechten Lagerstabilität einer Sulfit enthaltenden Löschflüssigkeit. Da die erwähnten basischen Stickstoffverbindungen als freie Basen vorliegen müssen, muß sich der pH-Wert der Löschflüssigkeit im mehr oder weniger stark alkalischen Bereich befinden.

Diese hohe Alkalität bewirkt beim Auftrag der Löschflüssigkeit auf die zu korrigierende Stelle eine Zerstörung der Papierstruktur, so daß der nachfolgend aufgebrachte neue Schriftzug faserig auseinanderläuft und die gewünschte scharfe Korrektur nicht mehr möglich ist.

Der Erfindung lag daher die Aufgabe zugrunde, die eingangs bezeichnete Löschflüssigkeit so weiterzubilden, daß sie einerseits die wünschenswerte Korrektur und Überschreibbarkeit von Schriftzeichen und dergleichen ermöglicht und andererseits eine verbesserte Lagerstabilität zeigt.

Erfindungsgemäß wird diese Aufgabe dadurch gelöst, daß die Löschflüssigkeit einen Zucker und/oder einen Zuckeralkohol in einer Menge von etwa 2 bis 50 Gew.-% und etwa 0,1 bis 5 Gew.-% einer reduzierenden Schwefelverbindung enthält.

Das Wesen der vorliegenden Erfindung besteht demzufolge darin, daß eine einen geringen Gehalt an reduzierender Schwefelverbindung aufweisende Löschflüssigkeit das gewünschte Entfärben von Tintenschriftzeichen auf der Basis von Triarylmethanfarbstoffen ermöglicht, jedoch durch die Einverleibung eines Zuckers und/oder festen Zuckeralkohols in der erwähnten Menge eine langzeitige Lagerung ohne Oxidation der reduzierenden Schwefelverbindung zum Sulfat gewährleistet wird. Es muß überraschen, daß ein Zucker bzw. auch ein Zuckeralkohol, gegebenenfalls in Vermischung, die störende Oxidation der reduzierenden Schwefelverbindung weitestgehend ausschließt. Vermutlich setzen diese Substanzen die Löslichkeit von Luft und damit von Sauerstoff in Wasser herab, so daß die reduzierende Schwefelverbindung der Oxidationswirkung von Sauerstoff entzogen ist. Der Einsatz eines mehr oder weniger hohen Anteils von Zucker und/oder festem Zuckeralkohol führt darüber hinaus zur Verminderung des nachteiligen Quellens des behandelten Papiers und ermöglicht dadurch an der gelöschten Stelle eine randscharfe Korrektur.

Im Hinblick auf die Art des Zuckers und/oder des festen Zuckeralkohols unterliegt die Erfindung keiner wesentlichen Einschränkung. Es kommen sämtliche denkbaren Zucker und Zuckeralkohole in Frage, die unter Normalbedingungen nicht flüssig sind, sofern dem Fachmann nicht ohne weiteres ersichtlich ist, daß sie aufgrund zusätzlicher funktioneller Gruppen eine nachteilige Wirkung auf den sich auf der zu korrigierenden Stelle befindenden Triarylmethanfarbstoff ausüben. Im Sinne der Erfindung sollen also die Begriffe "Zucker" und "Zuckeralkohole" weitestgehend verstanden werden, wobei die obigen Einschränkungen bedacht werden müssen. Fachsprachlich versteht man unter Zucker eine organische Verbindung mit Halbacetalcarbonyl- und mehreren Hydroxylgruppen im Molekül, also Polyhydroxyaldehyde (Aldosen) bzw. -ketone (Ketosen). Es soll sich also nicht allein um die Bezeichnung für Saccharose handeln, die umgangssprachlich auch als Rohr- oder Rübenzucker bezeichnet wird, sondern um Kohlenhydrate, insbesondere um Mono-, Di- und Oligosaccharide. Bevorzugt werden Mono- und Disaccharide. Besonders geeignete Disaccharide sind Saccharose, Trehalose, Lactose, Maltose und Cellobiose. Vorteilhafte Monosaccharide sind Glucose, Fructose, Mannose, Galaktose, Ribose, Sorbose, Allose, Altrose, Gulose, Idose, Talose und Invertzucker (hydrolysierte Disaccharide). Im Hinblick auf die oben angesprochene weit gefaßte Bedeutung des Begriffs "Zucker" sollen hierunter auch Pseudo-Zucker fallen. Als Pseudo-Zucker bezeichnet man solche Zucker, bei denen ein Ring-O einer Pyranose durch eine Methylen-Gruppe ersetzt ist. Auch fallen unter den Begriff "Zucker" Desoxyzucker bzw. Aminozucker, bei denen eine CH(OH)-Gruppe durch eine CH₂- bzw. CH(NH₂)-Gruppe ersetzt ist.

Bei den im Rahmen der Erfindung einsetzbaren festen Zuckeralkoholen handelt es sich um aus Monosacchariden durch Reduktion der Carbonylfunktion entstandene Polyhydroxyverbindungen, die keine Zucker sind, gleichwohl aber süß schmecken und deshalb gegebenenfalls Verwendung als Zuckeraustauschstoffe finden können.

Im Rahmen der Erfindung müssen diese, ebenfalls wie das gewählte Saccharid, unter Normalbedingungen (Raumtemperatur bzw. etwa 20 °C) fest sein. Dieses Erfordernis erfüllen insbesondere Sorbit, Mannit, Dulcit, Erythrit, Xylit und Glucit, die sich für die Zwecke der Erfindung als besonders vorteilhaft erwiesen haben.

Der Zucker bzw. der Zuckeralkohol kann in der erfindungsgemäßen Löschflüssigkeit in einem relativ breiten quantitativen Bereich von etwa 2 bis 50 Gew.-% enthalten sein. Bei Überschreiten des oberen Grenzwertes von etwa 50 % wird die Löschgeschwindigkeit ungenügend. Eine Unterschreitung des Grenzwertes von etwa 2 Gew.-% führt nicht zu der gewünschten Stabilisierung der Löschflüssigkeit. Der bevorzugte gewichtsprozentuale Bereich der Zucker und/oder Zuckeralkohole liegt zwischen etwa 5 und 35 Gew.-%, insbesondere zwischen etwa 5 und 25 Gew.-%.

In der erfindungsgemäßen Löschflüssigkeit liegt die Menge an reduzierender Schwefelverbindung in dem Bereich von etwa 0,1 bis 5 Gew.-%, insbesondere zwischen 0,1 und 2 Gew.-%. Vorteilhafterweise wird die Menge soweit herabgesetzt, daß die Löschflüssigkeit eine optimale Korrektur erlaubt. Dies gilt insbesondere für den Bereich zwischen etwa 0,3 und 0,8 Gew.-%. Die Art der jeweils verwendeten reduzierenden Schwefelverbindung ist für die Wirksamkeit der Löschflüssigkeit nicht von kritischer Bedeutung. Es muß sich lediglich um eine wasserlösliche reduzierende Schwefelverbindung handeln, wie beispielsweise Natrium- und/oder Kaliumsulfit, entsprechende Disulfite und dergleichen. Für den Fachmann ist es selbstverständlich, daß bezüglich der angesprochenen Funktion des Sulfits auch damit ähnliche bzw. vergleichbare Schwefelverbindungen herangezogen werden können, wie Dithionite und Addukte organischer Schwefelverbindungen, wie Formaldehyd-Sulfoxylat, Nitrilotrimethansulfinsäure-trinatriumsalz, Hydroxymethansulfinsäure-natriumsalz, die im Handel unter dem Warenzeichen Rongale bzw. Rongalite im Handel sind.

In Einzelfällen kann es von Vorteil sein, der Löschflüssigkeit noch eine weitere Lewis-Base einzuverleiben, wie beispielsweise Ammoniak, ein oligomeres bis polymeres Alkylenamin oder Alkylenimin, eine basische Stickstoffvebindung mit zusätzlichen stickstofffreien funktionellen Gruppen, wie beispielsweise Aminosäuren, Aminoalkohole, Amide, Imide, Lactame und Hydroxylammoniumverbindungen.

Mit diesen Verbindungen läßt sich die Löschwirkung der Löschflüssigkeit steigern. Sie sind darin vorzugsweise in einer Menge von etwa 0,05 bis 9, insbesondere 0,1 bis 5 Gew.-% enthalten.

Um ein schnelleres Trocknen der auf die Korrekturstelle aufgetragenen Löschflüssigkeit zu ermöglichen, kann diese zusätzlich ein Verflüchtigungshilfsmittel enthalten, wie flüchtige Alkohole, insbesondere Ethanol. Der bevorzugte Mengenbereich beträgt hierfür etwa 2 bis 20 Gew.-%, insbesondere etwa 5 bis 15 Gew.-%.

Neben den erwähnten Substanzen können der erfindungsgemäßen Löschflüssigkeit noch weitere bekannte Substanzen einverleibt sein. Hierbei handelt es sich beispielsweise um Netzmittel, wie Alkylphenolpolyglykoläther, Feuchthaltemittel, wie Glycerin, Diglykol und Triglykol, Bindemittel, wie Celluloseether und Acrylat, und dergleichen.

Der wesentliche Vorteil der erfindungsgemäßen Löschflüssigkeit liegt bei hervorragender Löschwirkung in der praktisch unbegrenzten Lagerfähigkeit, da durch die Einverleibung der Zucker und/oder des Zuckeralkohols die als Löschsubstanz dienende reduzierende Schwefelverbindung gegenüber der Einwirkung von Luftsauerstoff geschützt ist. In einem offenen Behälter ist sie mehr als ein halbes Jahr lagerfähig. Sie gestattet ein Überschreiben des Korrekturbereichs mit der gleichen Tinte. Dies beruht offenbar auf der Tatsache, daß die reduzierende Schwefelverbindung in geringer Konzentration von etwa 0,1 bis 5 Gew.-% eingesetzt werden kann, vorzugsweise in einer Konzentration von etwa 0,1 bis 2 Gew.- %. Die üblichen Sulfit enthaltenden Löschflüssigkeiten weisen einen Gehalt bis zu 10 Gew.-% Sulfit auf. Wegen der geringen Konzentration an reduzierender Schwefelverbindung gelangt beim Löschvorgang eine verhältnismäßig geringe Menge an Löschsubstanz in das Papier, die zwar für einen einmaligen Löschvorgang, aber nicht mehr für einen mehrmaligen Löschvorgang ausreicht.

Als Folge davon verbleibt nach dem Löschen eines fehlerhaften Schriftzuges ein nur so geringer Überschuß an Löschsubstanz im Papier, daß bei dem anschließenden Überschreiben mit der gleichen Tinte keine wesentliche Löschwirkung mehr eintritt und normalerweise beim erneuten Überschreiben sofort ein dauerhafter Schriftzug im Korrekturbereich gebildet wird. Da dieser Schriftzug mit der gleichen Tinte und mit dem gleichen Schreibgerät aufgebracht werden kann, unterscheidet er sich nicht von einem Originalschriftzug. Es sollte lediglich, wie bei Tintenlöschstiften üblich, darauf geachtet werden, daß das Papier vor dem Überschreiben bzw. einer Wiederholung des Überschreibens ausreichend getrocknet ist, damit die Tinte nicht in den Papierfasern verlaufen kann. Da der Anteil von Zucker und/oder Zuckeralkohol in der erfingungsgemäßen Löschflüssigkeit eine Auffaserung der Papieroberfläche im Korrekturbereich weitgehend ausschließt, ist auch der Einsatz eines Bindemittels, anders als bei bekannten Löschflüssigkeiten, nicht mehr erforderlich. Sollte zusätzlich ein Bindemittel einbezogen werden, dann muß es lediglich mit der Löschsubstanz verträglich sein.

Nachfolgend soll die Erfindung anhand verschiedener Rezepturbeispiele noch näher erläutert werden:

| Rezepturbeispiel 1: | |
|---|---|
| Wasser | 77,2 % |
| Glycerin | 2,0 % |
| Natriumsulfit | 0,8 % |
| Sorbit | 20,0 % |

| Rezepturbeispiel 2 | |
|---|---|
| Wasser | 78,2 % |
| Polyethylenimin (Polymin P der BASF) | 1,0 % |
| Natriumsulfit | 0,8 % |
| Fructose | 20,0 % |

| Rezepturbeispiel 3: | |
|---|---|
| Wasser | 73,8 % |
| Methyl-hydroxyethyl-cellulose | 0,2 % |
| Natriumsulfit | 1,0 % |
| Rohrzucker | 20,0 % |
| Ethanol | 5,0 % |

Die vorstehenden Rezepturbeispiele der erfindungsgemäßen Löschflüssigkeit wurden experimentell auf ihre Wirksamkeit überprüft. Es ergab sich, daß Schriftzüge aus Tinten auf der Basis von Triarylmethanfarbstoffen nahezu in allen Fällen sofort gelöscht wurden. Weiterhin war der Korrekturbereich (der mit der Löschflüssigkeit überstrichene Bereich) nach dem Trocknen mit der gleichen Tinte überschreibbar, wobei die Korrektur zur Erzielung eines dauerhaften Schriftzuges nicht wiederholt werden mußte. Die erfindungsgemäße Löschflüssigkeit war im offenen Behälter mehr als ein halbes Jahr unbeeinträchtigt lagerfähig.

## Patentansprüche

1. Wäßrige Löschflüssigkeit für Triarylmethanfarbstoffe enthaltende Tinten, die eine reduzierende Schwefelverbindung als eine die Entfärbung der Farbstoffe bewirkende Löschsubstanz und gegebenenfalls ein Bindemittel sowie weitere übliche Additive enthält, dadurch **gekennzeichnet,** daß die Löschflüssigkeit 2 bis 50 Gew.-% Zucker und/oder festen Zuckeralkohol und 0,1 bis 5 Gew.-% reduzierende Schwefelverbindung enthält.

2. Löschflüssigkeit nach Anspruch 1 oder 2, dadurch gekennzeichnet, daß der Zucker ein Mono- und/oder Disaccharid ist.

3. Löschflüssigkeit nach Anspruch 3, dadurch gekennzeichnet, daß das Disaccharid Saccharose und das Monosaccharid Glucose, Fructose und/oder Mannose ist.

4. Löschflüssigkeit nach mindestens einem der Ansprüche 1 bis 3, dadurch gekennzeichnet, daß der Zuckeralkohol Sorbit, Mannit, Dulcit, Erythrit, Xylit und/oder Glucit ist.

5. Löschflüssigkeit nach mindestens einem der Ansprüche 1 bis 5, dadurch gekennzeichnet, daß darin 5 bis 25 Gew.-% Zucker und/oder Zuckeralkohol enthalten sind.

6. Löschflüssigkeit nach mindestens einem der Ansprüche 1 bis 6, dadurch gekennzeichnet, daß sie zusätzlich zur Löschsubstanz eine Lewis-Base enthält.

7. Löschflüssigkeit nach Anspruch 7, dadurch gekennzeichnet, daß die Lewis-Base Ammoniak, ein oligomeres bis polymeres Alkylenamin oder Alkylenimin und/oder eine basische Stickstoffverbindung mit zusätzlichen stickstofffreien funktionellen Gruppen ist.

8. Löschflüssigkeit nach Anspruch 7 und 8, dadurch gekennzeichnet, daß sie 0,1 bis 5 Gew.-% Lewis-Base enthält.

9. Löschflüssigkeit nach mindestens einem der Ansprüche 1 bis 9, dadurch gekennzeichnet, daß sie 0,1 bis 2 Gew.-% reduzierende Schwefelverbindung enthält.

10. Löschflüssigkeit nach mindestens einem der Ansprüche 1 bis 9, dadurch gekennzeichnet, daß sie einen Alkohol enthält.

11. Löschflüssigkeit nach Anspruch 11, dadurch gekennzeichnet, daß sie als Alkohol Ethanol enthält.

12. Löschflüssigkeit nach Anspruch 11 oder 12, dadurch gekennzeichnet, daß sie 5 bis 15 Gew.-% Alkohol enthält.

## Claims

1. An aqueous erasing liquid for inks containing triaryl methane dyes, the liquid containing an erasing substance in the form of a reducing sulphur compound for decolorising the dye and also optionally containing a binder and other conventional additives, characterised in that the erasing liquid contains 2 to 50% by weight of sugar and/or solid sugar alcohol and 0.1 to 5% by weight of reducing sulphur compound.

2. An erasing liquid according to claim 1 or 2, characterised in that the sugar is a mono- and/or disaccharide.

3. An erasing liquid according to claim 3, characterised in that the disaccharide is saccharose and the monosaccharide is glucose, fructose and/or mannose.

4. An erasing liquid according to at least one of claims 1 to 3, characterised in that the sugar alcohol is sorbitol, mannitol, dulcitol, erythritol, xylitol and/or glucitol.

5. An erasing liquid according to at least one of claims 1 to 5, characterised in that it contains 5 to 25% by weight of sugar and/or sugar alcohol.

6. An erasing liquid according to at least one of claims 1 to 6, characterised in that in addition to the erasing substance, it contains a Lewis base.

7. An erasing liquid according to claim 7, characterised in that the Lewis base is ammonia, an oligomeric or polymeric alkylene amine or alkylene imine, and/or a basic nitrogen compound with additional nitrogen-free functional groups.

8. An erasing liquid according to claims 7 and 8, characterised in that it contains 0.1 to 5% by weight of Lewis base.

9. An erasing liquid according to at least one of claims 1 to 9, characterised in that it contains 0.1 to 2% by weight of reducing sulphur compound.

10. An erasing liquid according to at least one of claims 1 to 9, characterised in that it contains an alcohol.

11. An erasing liquid according to claim 11, characterised in that the alcohol therein is ethanol.

12. An erasing liquid according to claim 11 or 12, characterised in that it contains 5 to 15% by weight of alcohol.

## Revendications

1. Liquide aqueux d'effaçage pour encres contenant des colorants triarylméthane, qui contient un composé soufré réducteur, en tant que substance d'effaçage provoquant la décoloration des colorants, et éventuellement un liant ainsi que d'autres additifs usuels, caractérisé en ce que le liquide d'effaçage contient de 2 à 50 % en poids de sucre et/ou d'alcool glucidique solide, et de 0,1 à 5 % en poids de composé soufré réducteur.

2. Liquide d'effaçage selon la revendication 1, caractérisé en ce que le sucre est un mono- et/ou disaccharide.

3. Liquide d'effaçage selon la revendication 1 ou 2, caractérisé en ce que le disaccharide est le saccharose et le monosaccharide est le glucose, le fructose et/ou le mannose.

4. Liquide d'effaçage selon l'une quelconque des revendications 1 à 3, caractérisé en ce que l'alcool glucidique est le sorbitol, le mannitol, le dulcitol, l'érythritol, le xylitol et/ou le glucitol.

5. Liquide d'effaçage selon l'une quelconque des revendications 1 à 4, caractérisé en ce que de 5 à 25 % en poids de sucre et/ou d'alcool glucidique sont contenus dans celui-ci.

6. Liquide d'effaçage selon l'une quelconque des revendications 1 à 5, caractérisé en ce que, en plus de la substance d'effaçage, il contient une base de Lewis.

7. Liquide d'effaçage selon la revendication 6, caractérisé en ce que la base de Lewis est l'ammoniac, une alkylèneamine ou alkylèneimine oligomère à polymère et/ou un composé azoté basique à groupes fonctionnels non azotés supplémentaires.

8. Liquide d'effaçage selon la revendication 6 ou 7, caractérisé en ce qu'il contient de 0,1 à 5 % en poids de base de Lewis.

9. Liquide d'effaçage selon l'une quelconque des revendications 1 à 8, caractérisé en ce qu'il contient de 0,1 à 2 % en poids de composé soufré réducteur.

10. Liquide d'effaçage selon l'une quelconque des revendications 1 à 9, caractérisé en ce qu'il contient un alcool.

11. Liquide d'effaçage selon la revendication 10, caractérisé en ce que, en tant qu'alcool, il contient de l'éthanol.

12. Liquide d'effaçage selon la revendication 10 ou 11, caractérisé en ce qu'il contient de 5 à 15 % en poids d'alcool.
